(19) Europäisches Patentamt
European Patent Office
Office européen des brevets

(11) **EP 2 589 503 B1**

(12) **EUROPÄISCHE PATENTSCHRIFT**

(45) Veröffentlichungstag und Bekanntmachung des Hinweises auf die Patenterteilung:
**14.06.2017  Patentblatt 2017/24**

(51) Int Cl.:
***B60D 1/06*** *(2006.01)*        ***B60D 1/62*** *(2006.01)*
***B60D 1/24*** *(2006.01)*

(21) Anmeldenummer: **12007472.9**

(22) Anmeldetag: **02.11.2012**

(54) **Anhängekupplung mit einem Kraftsensor**

Trailer coupling with a force sensor

Couplage d'une remorque avec un capteur de force

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2011  DE 102011117519**

(43) Veröffentlichungstag der Anmeldung:
**08.05.2013  Patentblatt 2013/19**

(73) Patentinhaber: **WESTFALIA - Automotive GmbH 33378 Rheda-Wiedenbrück (DE)**

(72) Erfinder:
• **Sielhorst, Bernhard 33378 Rheda-Wiedenbrück (DE)**

• **Weiner, Marc 33332 Gütersloh (DE)**

(74) Vertreter: **Patentanwälte Bregenzer und Reule Partnerschaftsgesellschaft mbB Neckarstraße 47 73728 Esslingen (DE)**

(56) Entgegenhaltungen:
**EP-A2- 0 428 890        EP-A2- 2 280 263
WO-A1-85/03479        DE-A1- 10 327 564
GB-A- 2 270 985        US-A1- 2006 290 102
US-A1- 2010 332 049**

EP 2 589 503 B1

## Beschreibung

Die Erfindung betrifft eine Verfahren zur Ermittlung eines Anbringungsorts für einen Kraftsensor an einer Anhängekupplung gemäß dem Oberbegriff des Anspruchs 1.

Eine derartige Anhängekupplung ist z.B. aus DE 103 27 564 A1 bekannt.

Für einen optimalen Betrieb eines Gespanns bestehend aus einem Zugfahrzeug und einem Anhänger ist es zweckmäßig, die Stützlast, die auf der Anhängekupplung lastet, optimal einzustellen. Beispielsweise kann die Stützlast durch eine geänderte Beladung des Anhängers austariert werden. Bei einer zu großen Stützlast wird die Anhängekupplung überlastet, während bei einer zu kleinen Stützlast ein Lösen der Zugkugelkupplung von der Anhängekupplung zu befürchten ist.

Aus DE 36 17 426 A1 ist eine Anhängevorrichtung für ein Kraftfahrzeug bekannt, bei der mehrere Dehnungsmessstreifen an der Kugelstange befestigt werden, um die Stützlast zu messen.

Aus DE 10 2010 009 986 A1 ist eine Anhängekupplung für ein Zugfahrzeug bekannt, bei der ein kugelförmiger Kuppelkörper beweglich an einem Kupplungsarm gelagert ist, wobei ein Kraftsensor die Stützlast, die an dem Kuppelelement, nämlich der Kupplungskugel, angreift, misst. Ferner wird vorgeschlagen, mittels eines anderen Kraftsensors auch eine Zuglast, die an der Kupplungskugel angreift, zu messen. Hierfür sind allerdings mehrere, an verschiedenen Stellen vorgesehene Kraftsensoren vorhanden.

Es ist daher die Aufgabe der vorliegenden Erfindung, mit möglichst wenigen Kraftsensoren sowohl die Stützlast als auch eine Zuglast, die an der Anhängekupplung angreift, zu erfassen. Zur Lösung der Aufgabe ist ein Verfahren gemäß der technischen Lehre des Anspruchs 1 vorgesehen.

Ferner kann eine Anhängekupplung auch so definiert sein: Anhängekupplung für ein Zugfahrzeug, mit einem insbesondere einen Kupplungsarm umfassenden Kuppelträger, an dessen freiem Ende ein Kuppelelement, insbesondere eine Kupplungskugel, zum Anhängen eines Anhängers angeordnet ist und der an einer am Zugfahrzeug befestigten oder befestigbaren Halterung fest oder beweglich angeordnet ist, und mit mindestens einem Kraftsensor zur Erfassung einer auf die Anhängekupplung einwirkenden Kraft, wenn der Anhänger an die Anhängekupplung angekuppelt ist, wobei der mindestens eine Kraftsensor einen auf Druck- und/oder Zug empfindlichen, an einem an dem Kuppelträger oder der Halterung vorgesehenen Anbringungsort angeordneten Verformungssensor umfasst, wobei an dem Anbringungsort eine Dehnungsverformung und/oder Stauchungsverformung bei einer auf das Kuppelelement einwirkenden Kraft vorhanden ist, wobei vorgesehen ist, dass der Anbringungsort mittels einer Optimierung anhand mindestens zweier Optimierungskriterien gewählt ist, wobei ein erstes Optimierungskriterium ist, dass der Verformungssensor an dem Anbringungsort durch eine Verformung betätigbar ist, die durch eine bei einem Zugbetrieb des Anhängers auf das Kuppelelement wirkenden Zuglast verursacht ist, und wobei ein zweites Optimierungskriterium ist, dass der Verformungssensor an dem Anbringungsort durch eine Verformung betätigbar ist, die durch eine auf die Anhängekupplung wirkende Stützlast des Anhängers verursacht ist.

Ein Grundgedanke der Erfindung ist es, mit nur einem Kraftsensor mehrere Kräfte zu erfassen, die einen der Anhängekupplung angreifen. Dazu wird erfindungsgemäß die Lastsituation an der Anhängekupplung simuliert oder empirisch erfasst, beispielsweise durch mehrere Messungen, so dass bekannt ist, wie sich die Gesamtkonfiguration bestehend aus Kuppelträger und Halterung bei Belastung verhält, d.h. wo sowohl bei der auf das Kuppelelement einwirkenden Stützlast als auch der auf das Kuppelelement einwirkenden Zuglast eine für den jeweiligen Kraftsensor möglichst optimal erfassbare Dehnungsverformung und/oder Stauchungsverformung vorhanden ist.

Das Wort "Zuglast" soll so verstanden werden, dass sowohl eine Belastung auf Zug, d.h. beim Ziehen des Anhängers, als auch eine Belastung auf Druck, d.h. beim Schieben des Anhängers bzw.

Auflaufen auf das Zugfahrzeug bei beispielsweise einem Bremsen unter den Begriff Zuglast fällt. Mithin kann also eine Belastung der Anhängekupplung in Horizontalrichtung bei Geradeausfahrt des Gespanns als Zuglast verstanden werden.

Selbstverständlich tritt auch in vertikaler Richtung nicht nur eine Drucklast auf, die als Stützlast bezeichnet wird, sondern auch eine Belastung nach vertikal oben, zum Beispiel beim Überfahren einer Kuppe oder Bodenunebenheit. In einer Variante der Erfindung ist der Anbringungsort für den mindestens einen Kraftsensor im Bereich einer größten durch die Zuglast verursachbaren Verformung des Kuppelträgers oder der Halterung vorgesehen.

Der Kuppelträger ist beispielsweise als ein Kupplungsarm ausgestaltet. Der Kupplungsarm kann mehrere Krümmungen, Winkel und dergleichen enthalten. Das Kuppelelement ist beispielsweise eine Kupplungskugel, wobei selbstverständlich auch andere Geometrien, beispielsweise polygonale, Drehkräfte übertragende Kuppelelemente möglich sind. Bevorzugt ist das Kuppelelement fest am Kuppelträger angeordnet, insbesondere mit diesem einstückig. Es ist aber auch eine mehrteilige Bauweise möglich. Die Halterung kann eine Halterung sein, an der der Kuppelträger fest montiert ist. Weiterhin sind auch Stecksysteme oder sonstige Systeme möglich, bei denen der Kuppelträger lösbar an der Halterung befestigbar ist, insbesondere mittels einer Steckverbindung. Es ist aber auch eine bewegliche Lagerung möglich, bei der der Kuppelträger beispielsweise schwenkbar und/oder schiebebeweglich an der Halterung gelagert ist.

Es ist in einer Variante der Erfindung vorgesehen, dass der Anbringungsort im Bereich einer größten durch die Stützlast verursachbaren Verformung des Kuppelträgers oder der Halterung vorgesehen ist.

Natürlich ist es zweckmäßig, wenn ein Anbringungsort gefunden werden kann, bei dem die Dehnungsverformung und Stauchungsverformung sowohl bei der Zuglast als auch bei der Stützlast jeweils maximal sind. Es gibt jedoch auch Situationen bzw. Geometrien von Halterung und/oder Kuppelträger, bei denen ein solcher optimaler Anbringungsort gar nicht erst gefunden werden kann. So kann beispielsweise die Verformung bei der Stützlast an einer anderen Stelle ihr Maximum haben als die Verformung bei der Zuglast. Zweckmäßig ist es dann, wenn sozusagen ein Kompromiss gefunden wird, so dass die durch die Zuglast verursachbare Verformung und die durch die Stützlast verursachbare Verformung einen ähnlichen Betrag oder den gleichen Betrag an dem als Kompromiss gefundenen Anbringungsort aufweisen.

Ein weiterer Faktor bzw. einen Optimierungskriterium kann auch sein, dass der Anbringungsort möglichst an einer von einer Fahrbahn abgewandten Oberseite des Kuppelträgers oder der Halterung vorgesehen ist. Dadurch ist das Risiko, dass der Kraftsensor beschädigt wird, deutlich geringer.

Weiterhin ist es ein Optimierungskriterium, dass der Anbringungsort möglichst nahe bei einer Auswerte- und/oder Anzeigeeinrichtung angeordnet ist. Beispielsweise kann eine Leitungsverbindung zu einer Auswerte- und/oder Anzeigeeinrichtung möglichst kurz gewählt werden. Wenn also beispielsweise zwei Anbringungsorte alternativ zur Verfügung stehen, an denen jeweils eine zur Betätigung des Kraftsensors ausreichende Verformung bei Stützlast und Zuglast vorhanden ist, ein Anbringungsort jedoch näher bei der Auswerte- und/oder Anzeigeeinrichtung ist als der andere Anbringungsort, wird zweckmäßigerweise der näher gelegene Anbringungsort ausgewählt. Die Übertragungsverluste für die Signalübertragung vom Kraftsensor bzw. Verformungssensor zur auswertenden und/oder anzeigenden Einheit sind also kurz. Das Risiko der Einstrahlung von Fremdsignalen oder sonstigen Störungen wird dadurch wesentlich kleiner.

Beispielsweise kann der Verformungssensor einen Dehnungsmessstreifen und/oder einen Drucksensor umfassen.

Selbstverständlich kann es zweckmäßig sein, dass mehrere Kraftsensoren vorhanden sind, von denen mindestens einer ein Verformungssensor, der die Zuglast und die Stützlast messen kann. Wenn mehrere Kraftsensoren vorhanden sind, möglicherweise auch mehrere sozusagen multifunktionale Kraftsensoren, die jeweils Stützlast und Zuglast messen können, erhöht dies die Messgenauigkeit.

Beispielsweise kann die Dehnung bzw. Verformung des Kuppelträgers oder der Halterung anhand einer Finite-Elemente-Berechnung ermittelt werden.

Der Kraftsensor bzw. Verformungssensor liefert also sowohl bei Belastung mit einer Zuglast als auch bei einer Belastung der Anhängekupplung mit einer Stützlast jeweils ein Kraftsignal. Bevorzugt ist bei dieser Ausführungsform vorgesehen, dass die Anhängekupplung eine Auswerteeinrichtung umfasst, die zur Auswertung des Kraftsignals in Abhängigkeit von einem Beschleunigungszustand und/oder einem Geschwindigkeitszustand des Zugfahrzeugs und somit auch der Anhängekupplung ausgestaltet ist. Wenn das Gespann steht, lastet im Wesentlichen die Stützlast auf der Anhängekupplung. Die Geschwindigkeit ist also beispielsweise gleich null. Auch die Beschleunigung bzw. der Beschleunigungswert ist null. Dann ermittelt die Auswerteeinrichtung vorteilhaft die Stützlast anhand des Kraftsignals. Wenn das Gespann jedoch fährt, insbesondere wenn es beschleunigt oder abbremst, greift eine Zuglast an der Anhängekupplung an. Dann ermittelt die Auswerteeinrichtung zweckmäßigerweise die Zuglast.

Der Beschleunigungswert ist dabei ein Beschleunigungswert in Fahrtrichtung oder x-Richtung, nicht jedoch ein beispielsweise um die Hochachse orientierter Gierraten-Beschleunigungswert.

Zweckmäßigerweise hat die Auswerteeinrichtung einen Signaleingang für ein Beschleunigungssignal. Beispielsweise ist eine Anschlussklemme, eine Buchse oder dergleichen für den Beschleunigungssensor vorhanden. Der Beschleunigungssensor ist bei dieser Ausgestaltung eine separate mit der Auswerteeinrichtung verbindbare Baueinheit.

Es ist auch möglich, dass die Auswerteeinrichtung einen Beschleunigungssensor an Bord hat.

Die Auswerteeinrichtung hat zweckmäßigerweise eine Bus-schnittstelle für einen Daten-Bus des Zugfahrzeugs. Beispielsweise umfasst die Schnittstelle eine CAN-Schnittstelle, eine LIN-Schnittstelle oder dergleichen. Über die Bus-schnittstelle kann beispielsweise der Beschleunigungswert empfangen werden. Zum Beispiel hat das Zugfahrzeug einen oder mehrere Beschleunigungssensoren. Es ist auch möglich, dass das Bordnetz des Zugfahrzeugs Beschleunigungswerte übermittelt, die beispielsweise aufgrund von Drehzahlsignalen ermittelt wurden. Die Auswerteeinrichtung ist beispielsweise ausgestaltet, über die Bus-Schnittstelle den Massewert des Anhängers zu übertragen. Es versteht sich, dass anstelle einer Bus-Schnittstelle auch eine sonstige Datenschnittstelle möglich ist.

Die Auswerteeinrichtung ist zweckmäßigerweise auch zur Ermittlung einer Stützlast, die auf der Anhängekupplung aufgrund des Anhängers lastet, ausgestaltet. In diesem Zusammenhang ist es vorteilhaft, wenn die Auswerteeinrichtung bei der Ermittlung des Anhänger-Massewerts des Anhängers eine Stützlast, die der Anhänger auf die Anhängekupplung ausübt, berücksichtigt. Eine Variante kann dabei zwar vorsehen, dass die Stützlast extern ermittelt und über einen entsprechenden Daten- oder Signaleingang an die Auswerteeinrichtung übermittelt wird. Bevorzugt ist es jedoch, wenn die Auswerteeinrichtung selbst dazu ausgestaltet ist, die Stützlast zu ermitteln.

Eine vorteilhafte Überlegung sieht vor, dass die Auswerteeinrichtung den Anhänger-Massewert nicht im Stand, sondern bei Fahrt des Zugfahrzeugs ermittelt. Beispielsweise ist es vorteilhaft, wenn die Auswerteeinrichtung den Anhänger-Massewert in Abhängigkeit von einer Fahrgeschwindigkeit des Zugfahrzeugs ermittelt. So sieht eine Variante vor, dass die Auswerteeinrichtung erst bei überschreiten eines unteren Geschwindigkeitsgrenzwertes mit der Ermittlung des Anhänge-Massewerts beginnt. Es ist zweckmäßig, wenn die Auswerteeinrichtung den Anhänger-Massewert nur bis zum Erreichen eines oberen Geschwindigkeitsgrenzwertes ermittelt. Hierbei liegt die Überlegung zu Grunde, dass bei geringen Fahrgeschwindigkeiten im Wesentlichen die Zugkraft eine der Anhängekupplung wirkt, während bei größeren Geschwindigkeiten beispielsweise auch Luftwiderstand-Einflüsse zu berücksichtigen wären. Selbstverständlich ist es denkbar, einen Algorithmus bei einer erfindungsgemäßen Anhängekupplung vorzusehen bzw. bei deren Auswerteeinrichtung, der auch Luftwiderstandseinflüsse berücksichtigt und gegebenenfalls eliminiert.

Es ist auch vorteilhaft, wenn die Auswerteeinrichtung das Kraftsignal erst bei Überschreiten eines unteren Mindest-Beschleunigungswerts zur Ermittlung der Anhänger-Masse auswertet. Ferner kann auch eine obere Grenze vorgesehen sein, das heißt dass die Auswerteeinrichtung das Kraftsignal nur bis zum Erreichen eines Maximal-Beschleunigungswerts auswertet.

Eine weitere Variante der Erfindung sieht vorteilhaft vor, dass die Auswerteeinrichtung das Kraftsignal während einer Zeitdauer kontinuierlich ansteigende Beschleunigungswerte oder kontinuierlich abfallende Beschleunigungswerte als ein die an der Anhängekupplung angreifende Zugkraft und/oder Schubkraft repräsentierendes Signal auswertet. Wenn also beispielsweise die Beschleunigungskurve ansteigt (bei einem Beschleunigungsvorgang) oder abfällt (bei einem Bremsvorgang) wertet die Auswerteeinrichtung das Kraftsignal als Zugkraft-Signal aus und/oder ermittelt die Auswerteeinrichtung aus dem Kraftsignal jeweils den Anhänger-Massewert.

Eine Variante der Erfindung sieht vor, dass die Auswerteeinrichtung erkennt, wenn das Zugfahrzeug aus dem Stand beschleunigt. Bevorzugt wird dann die Messung der Stützlast bzw. deren Ermittlung gestoppt. Stattdessen beginnt die Auswerteeinrichtung mit der Auswertung der Zugkraft und der Beschleunigungswerte und stoppt diesen Vorgang erst dann, wenn die Beschleunigung endet oder wenn die Fahrgeschwindigkeit einen bestimmten Grenzwert überschreitet, beispielsweise 5 bis 10 km/h.

Bevorzugt ist also eine Auswerteeinrichtung vorgesehen, die zur Ermittlung eines Anhänger-Massewerts des Anhängers anhand eines oder mehrerer Kraftsignale des mindestens einen Kraftsensors und eines Beschleunigungswerts ausgestaltet ist. Anhand der Werte für die Stützlast und für die Zuglast sowie des Beschleunigungswerts kann also die Auswerteeinrichtung gemäß dieser Ausführungsform der Erfindung eine Anhängermasse ermitteln.

Die nachfolgende Vorgehensweise ist dabei bevorzugt:

In vertikaler Richtung, d.h. in Z-Richtung wirkt die Stützlast Fz auf die Anhängekupplung:

$$F_Z = st * g \qquad\qquad (1)$$

In der Formel (1) sind g die Erdbeschleunigung und st die auf das Kuppelelement wirkende Stützmasse.

Eine in x-Richtung bzw. horizontal in Fahrzeuglängsrichtung an der Anhängekupplung angreifende Zuglast Fx kann mit der nachfolgenden Formel (2) zusammengefasst werden:

$$F_x = F_T + F_L + F_R + F_{rot} \qquad\qquad (2)$$

Die einzelnen Faktoren der Zuglast Fx sind dabei die Trägheitskraft FT, die Luftwiderstandskraft FL, eine die Rollreibung verursachte Kraft FR und eine Kraft Frot, in der die durch die Trägheit von Reifen und anderen rotatorischen Massen bedingten Kräfte zusammengefasst sind.

Bei geringen Geschwindigkeiten kann die Luftwiderstandskraft FL vernachlässigt werden. Es ist daher vorteilhaft, die erfindungsgemäße Ermittlung einer Anhängermasse bei relativ niedrigen Geschwindigkeiten durchzuführen, bei denen der Luftwiderstand noch gering ist. Selbstverständlich ist es auch denkbar, dass beispielsweise der Einfluss des Luftwiderstands von der Auswerteeinrichtung geschwindigkeitsabhängig ermittelt wird, um den jeweiligen Einfluss auf das Gesamt-Resultat der Zuglast Fx zu eliminieren.

Wenn jedoch die Luftwiderstandskraft eliminiert wird, kann die obige Formel (2) wie folgt vereinfacht werden:

$$F_x = F_T + F_R + F_{rot} \qquad\qquad (3)$$

Die durch die Rollreibung verursachte, an der Anhängekupplung angreifende Kraft FR wird durch die Masse m des Anhängers beeinflusst, wobei jedoch ein Teil dieser Masse von der Anhängekupplung abgestützt wird, d.h. so dass diese Stützlast oder Stützmasse keinen Einfluss auf die Rollreibung hat. Die Stützmasse st ist also bei der folgenden Formel (4) von dem Massewert m subtrahiert:

$$F_R = (m - st) * g * \mu \qquad (4)$$

In der Formel (4) sind g die Erdbeschleunigung und µ ein Rollwiderstandskoeffizient. Der Rollwiderstandkoeffizient kann als ein konstanter Wert, z.B. Mittelwert, angesehen werden, der bei einer üblichen Bereifung bzw. bei durchschnittlichen Fahrbahnbelägen vorhanden ist.

Die Trägheitskraft FT wird im Wesentlichen durch die Anhängermasse m und die Beschleunigung ax in X-Richtung bestimmt:

$$FT = m * ax \qquad (5)$$

Wenn die Formeln (4) und (5) in die Formel (3) eingesetzt werden, ergibt sich folgendes:

$$F_x - F_{rot} = m * a_x + (m - st) * g * \mu \qquad (6)$$

Wenn dann noch die Formel (1) berücksichtigt wird, kann man folgende Formel entwickeln:

$$F_x - F_{rot} + F_z * \mu = m * (a_x + g * \mu) \qquad (7)$$

Durch Umformung der Formel (7) kann die Masse des Anhängers wie folgt bestimmt werden:

$$m = \frac{F_x - F_{rot} + F_z * \mu}{(a_x + g * \mu)} \qquad (8)$$

Unter Berücksichtigung der Überlegung, dass die Rotationsbeschleunigung nur geringe Kräfte verursacht, d. h. dass das Verhältnis der Kraft Frot zur Gesamt-Kraft Fx in Horizontalrichtung wie folgt lautet

$$\frac{F_{rot}}{F_x} * 100 = 2\% \ bis \ 3\%$$

kann in der obigen Formel (8) der Anteil der Kraft Frot vernachlässigt werden. Die Masse des Anhängers lässt sich also durch die beiden Kräfte Fx und Fz sowie den Beschleunigungswert in X-Richtung bzw. Fahrzeug-Längsrichtung ax ermitteln.

Eine vorteilhafte Variante der Erfindung sieht dabei vor, dass mit einem einzigen Kraftsensor beide Kräfte Fx und Fz ermittelt werden. Dabei ist die Auswerteeinrichtung zweckmäßigerweise so ausgestaltet, dass sie zunächst im Stand die durch die Stützlast verursachten Kräfte, d.h. die Kräfte in z-Richtung, nämlich die Kraft Fz, ermittelt und bei der anschließenden Beschleunigung des Gespanns die in X-Richtung wirkende Kraft Fx. In diesem Zusammenhang ist es vorteilhaft, wenn die Auswerteeinrichtung einen Beschleunigungswert und/oder einen Geschwindigkeitswert auswertet, um sozusagen zwischen den einzelnen Kraftermittlungen umzuschalten.

So ist es beispielsweise vorteilhaft, dass zunächst die in vertikaler Richtung wirkende Kraft Fz ermittelt wird und die Auswerteeinrichtung den dabei ermittelten Wert in die obige Formel (8) sowie den anschließend bei der Beschleunigung des Gespanns ermittelten Wert der Kraft Fx zur Ermittlung der Masse des Anhängers anhand beispielsweise der Formel (8) auswertet.

Selbstverständlich ist es zwar für die Masseerkennung bzw. Masseermittlung des Anhängers vorteilhaft, wenn nur ein einziger Kraftsensor nötig ist, der sowohl die Zuglast als auch die Stützlast erfassen kann. Es ist auch möglich, dass beispielsweise für die Ermittlung und Messung beider Kräfte jeweils ein separater oder mehrere separate Kraftsensoren, zum Beispiel Dehnungsmessstreifen, vorhanden sind.

Weiterhin stellt es eine vorteilhafte Variante der Erfindung dar, wenn die Auswerteeinrichtung eine Mittelwertbildung beherrscht, d.h. dass sie beispielsweise mehrere Stützlastwerte ermittelt und daraus einen Mittelwert bildet, um Fehler zu verringern oder zu eliminieren, die beispielsweise durch eine ungünstige Position des Kupplungsbereichs in einer Fahrbahnmulde oder über einer Fahrbahnerhebung entstehen kann. Das Gespann kann nämlich in vertikaler Richtung bzw. X-Richtung einen Winkel zueinander aufweisen, der die Stützlast beeinflusst.

Weiterhin ist eine Plausibilitätsprüfung zweckmäßig, bei der die Auswerteeinrichtung nur solche Kraftwerte und oder solche Beschleunigungswerte zur Berechnung des Massewert des Anhängers berücksichtigt, die plausibel sind.

Es ist weiterhin vorteilhaft, wenn die Auswerteeinrichtung auch in Bezug auf den Massewert mehrere Werte ermittelt, beispielsweise bei unterschiedlichen Beschleunigungswerten, anhand mehrerer nacheinander erfolgender Beschleunigungsvorgänge und dergleichen, um auf diesem Wege Fehler zu vermeiden.

Die Anhängekupplung weist beispielsweise eine Anzeigeeinrichtung zur Anzeige der ermittelten Werte von Stützlast und/oder Zuglast und/oder Anhänger-Massewert auf.

Das erfindungsgemäße Verfahren kann beispielsweise anhand einer Software realisiert werden, wobei ein Prozessor der Auswerteeinrichtung anhand der Software in der Lage ist, die erfindungsgemäßen Verfahrensschritte auszuführen. Ein anderer Aspekt der Erfindung kann vorsehen, dass die Auswerteeinrichtung ein Steuergerät des Zugfahrzeugs ist, Das anhand der vorgenannten Software in der Lage ist, das erfindungsgemäße Verfahren durchzuführen.

Nachfolgend werden Ausführungsbeispiele der Erfindung anhand der Zeichnung erläutert. Es zeigen:

Figur 1    eine erfindungsgemäße Anhängekupplung mit einem an einer Halterung feststehenden Kuppelträger in perspektivischer Ansicht von schräg oben,

Figur 2    einen Kuppelträger der Anhängekupplung gemäß Figur 1 von schräg oben,

Figur 3    den Kuppelträger gemäß Figur 2 von der Fahrzeugseite her,

Figur 4    eine Unterseite des Kuppelträgers gemäß Figuren 2, 3,

Figur 5    eine Anhängekupplung mit einem an einer Halterung beweglich gelagerten Kuppelträger und einer Auswerteeinrichtung,

Figur 6    den Kuppelträger der Anhängekupplung gemäß Figur 5 von vorn,

Figur 7    eine Unterseite des Kuppelträgers der Anhängekupplung gemäß Figuren 5, 6,

Figur 8    eine Beschleunigungskurve eines Zugfahrzeugs,

Figur 9    ein Blockschaltbild einer Auswerteeinrichtung, und

Figur 10   ein Ablaufdiagramm eines Verfahrens, das von der Auswerteeinrichtung gemäß Figur 9 durchführbar ist.

In der Zeichnung sind Anhängekupplungen 10 und 110 dargestellt, die teilweise gleiche oder ähnliche Komponenten aufweisen, die dementsprechend mit den gleichen Bezugsziffern oder mit Bezugsziffern versehen sind, die bei der Anhängekupplung 110 um 100 größer sind als bei der Anhängekupplung 10.

Die Anhängekupplungen 10, 110 weisen Halterungen 11, 111 auf, die an einem Zugfahrzeug 90, zum Beispiel einem Personenkraftwagen, befestigbar sind.

Beispielsweise umfasst die Halterung 11 einen an einem Querträger 91 des Zugfahrzeugs 90 angeordneten Grundhalter 12, von dem 2 Halteschenkel 13 abstehen. Zwischen den Halteschenkeln 13 ist ein Kuppelträger 14 angeordnet. Der Kuppelträger 14 ist mittels Schrauben 15, die Bohrungen 16 des Kuppelträgers 14 an einem fahrzeugseitigen Halteabschnitt 20 durchdringen, mit den Halteschenkeln 13 verschraubt. Somit ist also der Kuppelträger 14 fest an der Halterung 11 befestigt. Von der Halterung 11 steht noch ein Steckdosenhalter 17 seitlich ab, an dem eine Anhängersteckdose (nicht dargestellt) befestigbar ist.

Bei der Anhängekupplung 110 ist eine am Zugfahrzeug 90 befestigbare, zum Beispiel an einem nicht dargestellten Querträger befestigbare, Halterung 111 vorgesehen, die den Kuppelträger 114 beweglich lagert. Beispielsweise ist der Kuppelträger 114 schwenkbar und/oder verschieblich an der Halterung 111 gelagert. Ein Lagerkopf 118 der Halterung 111 greift in eine Lageraufnahme 119 an einem Halteabschnitt 20 des Kuppelträgers 114 am fahrzeugseitigen Endbereich des Kuppelträgers 114 ein, so dass eine Lagerung in der Art eines Kugelgelenks gegeben ist.

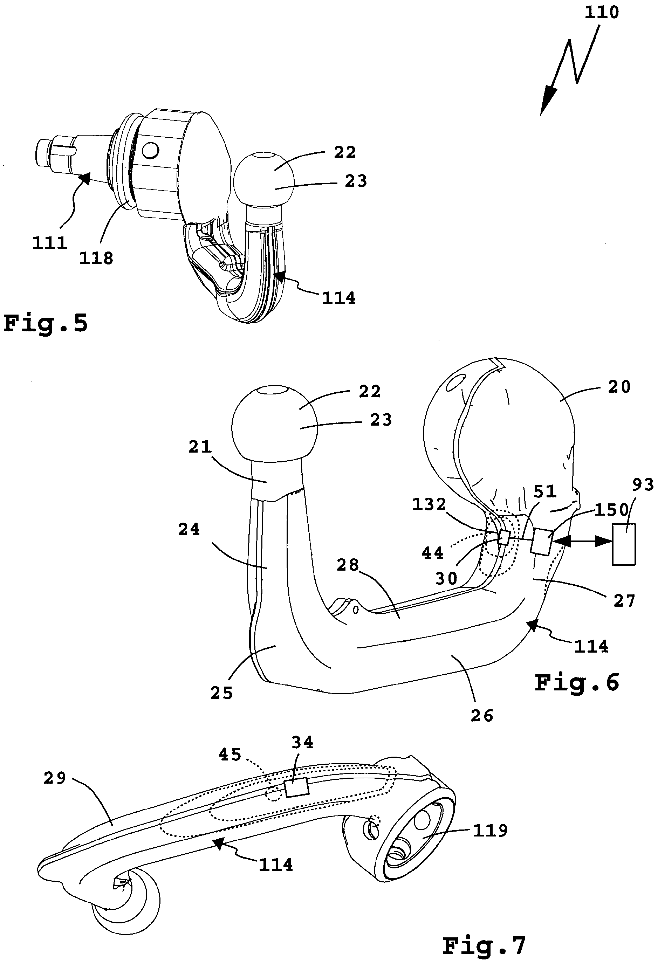

Der Kuppelträger 114 ist beispielsweise zwischen einer in Figur 5 dargestellten Gebrauchsstellung, die zum Ziehen eines Anhängers 92 vorgesehen ist, und einer hinter einen nicht dargestellten Stoßfänger, beispielsweise näher an den Querträger zurück verstellten, Nichtgebrauchsstellung verstellbar. Zusätzlich ist noch eine nicht dargestellte Verriegelung vorhanden, um den Kuppelträger 114 zumindest in der Gebrauchsstellung zu verriegeln.

Die Kuppelträger 14, 114 haben an ihren vom Zugfahrzeug 90 entfernten Endbereichen 21 jeweils eine Kupplungskugel 22, die als Kuppelelement 23 zum Ankuppeln des Anhängers 92 (schematisch dargestellt) dient. Die Kupplungskugeln 22 sind an in der Gebrauchsstellung der Anhängekupplungen 10, 110 hoch stehenden Armabschnitten 24 vorgesehen. Die Armabschnitte 24 gegen mit einer Krümmung 25 in einen bei Gebrauch der Kuppelträger 14, 114 im Wesentlichen horizontal verlaufenden Armabschnitt 26 über.

Beim Kuppelträger 14 sind der Armabschnitt 26 und der Endbereich 21 quasi einstückig, d.h. dass der Endbereich 21 an einem freien Ende des Armabschnitts 26 vorgesehen ist. Nachfolgend wird jedoch der frei vor die Halterung 11 vorstehende Abschnitt des Kuppelträgers 14 als Armabschnitt 26 bezeichnet.

Beim Kuppelträger 114 ist zwischen dem Halteabschnitt 20 und dem Armabschnitt 26 noch eine weitere Krümmung 27 vorhanden.

Die Anhängekupplungen 10, 110 sind dazu ausgestaltet, sowohl eine in einer vertikalen Richtung bzw. z-Richtung auf das Kuppelelement 23 wirkende Kraft, nachfolgend als Stützlast $F_z$ bezeichnet, als auch eine in einer horizontalen Richtung bzw. x-Richtung auf das Kuppelelement 23 wirkende Last, nachfolgend als Zuglast $F_x$ bezeichnet, zu messen. Dazu ist ein einziger Kraftsensor 30 ausreichend. Der Kraftsensor 30 kann beispielsweise ein Dehnungsmessstreifen 31 oder ein anderer Verformungssensor 35 sein, z.B. ein Drucksensor, der zwischen zwei Betätigungswiderhalte am Kuppelträger 14 eingespannt ist. Der Kraftsensor 30 ist so optimal an einem Anbringungsort 32 platziert, dass sein Kraftsignal 33 sowohl die Zuglast $F_x$ als auch die Stützlast $F_z$ repräsentiert.

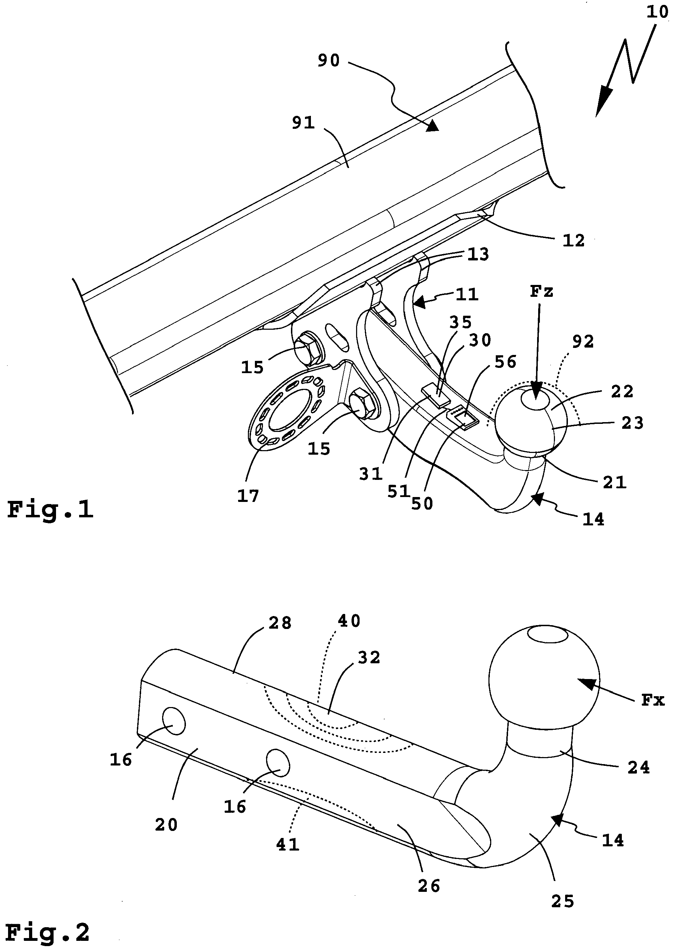

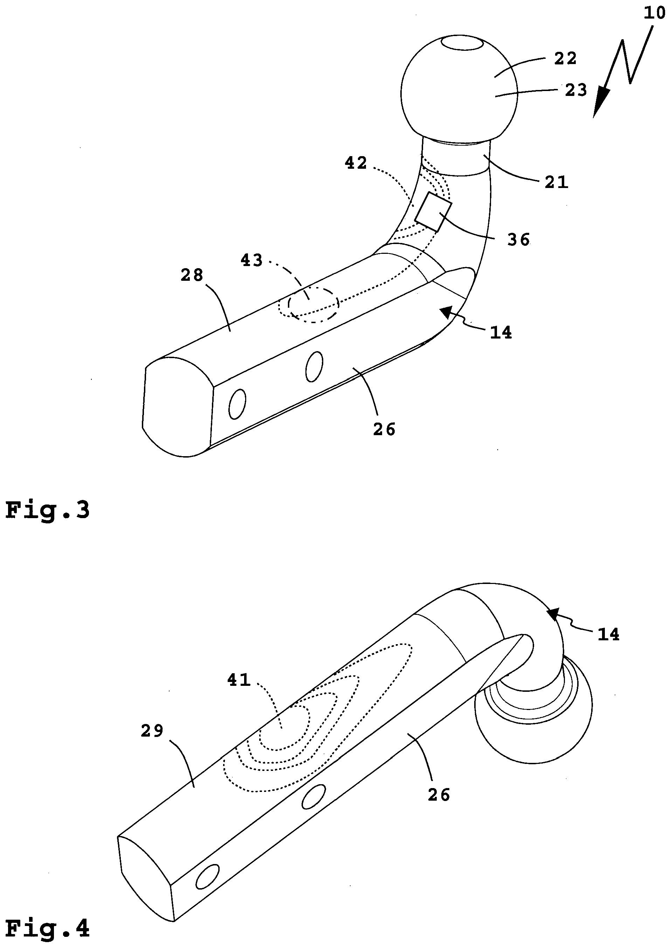

In den Figuren 2-4 sind mit gestrichelten Linien Dehnungsverläufe bzw. Dehnungsbereiche eingezeichnet, die sich bei unterschiedlicher Kraftbeanspruchung des Kuppelträgers 14 mit der Zuglast $F_x$ und der Stützlast $F_z$ ergeben. Bei einer Belastung mit der Stützlast $F_z$ ergeben sich beispielsweise die in den Figuren 2 und 4 sichtbaren Verformungsbereiche 40 und 41 an einer Oberseite 28 und einer Unterseite 29 des Armabschnitts 26. Diese Dehnungsverformung stellt sich beispielsweise bei einer Belastung von 100 kg auf das Kuppelelement 23 ein.

In Figur 3 ist der Kuppelträger 14 bei Belastung mit einer Zuglast $F_x$ dargestellt, beispielsweise einer Krafteinwirkung von 5 kN. Zusätzlich ist es dabei zweckmäßig, die noch immer wirkende Stützlast $F_z$ von beispielsweise 100 kg, auf das Kuppelelement 23 wirken zu lassen. Dabei bildet sich ein Verformungsbereich 42 insbesondere einen der Innenseite der Krümmung 25 aus. Der Verformungsbereich 42 erstreckt sich aber bis in den Verformungsbereich 40 hinein (Figur 2). Somit ist also quasi eine Schnittmenge vorhanden, nämlich ein Überlappungsbereich 43, an dem sich die Verformungsbereiche 40 und 42 überlappen und sowohl bei Belastung mit der Zuglast $F_x$ als auch mit der Stützlast $F_z$ eine signifikante Verformung vorhanden ist. Im Überlappungsbereich 43 ist also der Kraftsensor 30 zweckmäßigerweise angeordnet, so dass er durch Belastung des Kuppelelements 23 mit der Zuglast $F_x$ als auch mit der Stützlast $F_z$ betätigbar ist und sein Kraftsignal 33 beide Kräfte repräsentiert.

Im Prinzip ist auch auf der Unterseite 29 des Kuppelträgers 14 ein Überlappungsbereich von Verformungsbereichen vorhanden, die sich bei Belastung des Kuppelelements 23 mit der Zuglast und mit der Stützlast einstellt. Die Anordnung des Kraftsensors 30 an der Oberseite 28 hingegen hat den Vorteil, dass der Kraftsensor 30 dort vor Umwelteinflüssen besser geschützt ist und zudem auch die Platzierung einer zweckmäßigerweise gut sichtbaren Auswerteeinrichtung 50 näher bei den Kraftsensor 30 möglich ist. Eine Leitungsverbindung 51 zwischen dem Kraftsensor 30 und der Auswerteeinrichtung 50 ist sehr kurz.

Auch die Anhängekupplung 110 kommt mit einem einzigen Kraftsensor 30 aus. Bei Belastung des Kuppelträgers 114 mit einer Zuglast $F_x$ und auch einer Stützlast $F_z$ bildet sich beispielsweise ein Verformungsbereich 44 an der Innenseite der Krümmung 27 aus. Auch an der Unterseite 29 findet bei Belastung des Kuppelelements 23 eine Verformung statt, die sich in einem Verformungsbereich 45 befindet. Allerdings ist, wie bereits erwähnt, die Anordnung eines Kraftsensors an einer Unterseite eines Kuppelträgers, d.h. näher bei einer Fahrbahn, eher ungünstig. Daher ist der Kraftsensor 30 am Anbringungsort 132 in der Krümmung 27 angeordnet. Dort ist der Kraftsensor 30 vor Umwelteinflüssen zudem noch durch den nicht dargestellten Stoßfänger des Zugfahrzeugs 90 geschützt. In der Nähe des Kraftsensors 30 befindet sich eine Auswerteeinrichtung 150, beispielsweise direkt neben dem Kraftsensor 30, so dass auch hier eine kurze Leitungsverbindung 51 gegeben ist.

Nun wäre es möglich, dass weitere Kraftsensoren, beispielsweise Drucksensoren oder Dehnungsmessstreifen, an den Anhängekupplungen 10, 110 vorhanden sind, so dass dediziert für die Zugkraft und die Stützlast separate Messergebnisse für die Auswerteeinrichtungen 50, 150 zur Verfügung stünden.

Beispielsweise könnte an der Unterseite 29 des Kuppelträgers 14 im Verformungsbereich 41 ein weiterer Kraftsensor 34, insbesondere ein Dehnungsmessstreifen, vorgesehen sein.

Die Auswerteeinrichtungen 50, 150 können beispielsweise die Stützlast $F_z$ und die Zuglast $F_x$ anzeigen, zwischenspeichern, an ein Bordnetz 93 des Zugfahrzeugs 90 übertragen oder dergleichen. Die Auswerteeinrichtungen 50, 150 können weiterhin eine Masse m des Anhängers 92 aus dem Kraftsignal 33 ermitteln, wofür die eingangs erläuterte Methode bevorzugt ist.

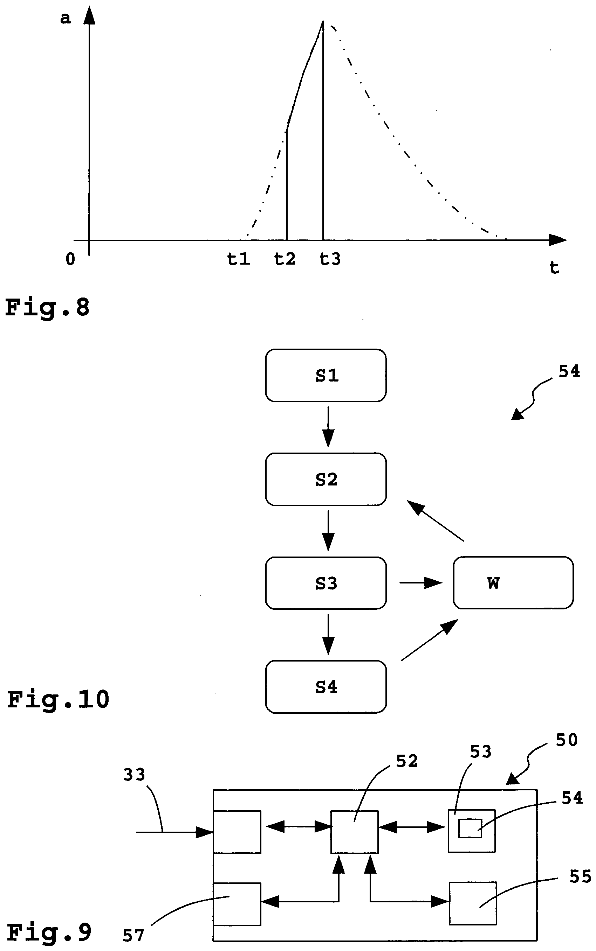

Beispielsweise arbeiten die Auswerteeinrichtungen 50, 51 wie folgt, wobei Das in Figur 9 dargestellte Block schalt Bild exemplarisch für beide Auswerteeinrichtung 50, 150 steht.

Die Auswerteeinrichtung 50 umfasst beispielsweise einen Prozessor 52 und einen Speicher 53, in dem ein Auswertemodul 54 gespeichert ist. Figur 10 zeigt einen vereinfachten Programmablauf des Auswertemoduls 54, dessen Befehle vom Prozessor 52 ausführbar sind, um anhand des Kraftsignals 33 die Stützlast $F_z$ und insbesondere die Masse m des Anhängers 92 zu ermitteln.

In einem Schritt S1 initialisiert das Auswertemodul 54 den Kraftsensor 30 sowie einen Beschleunigungssensor 55. Der Beschleunigungssensor 55 ist an Bord der Auswerteeinrichtung 50.

In einem Schritt S2 erkennt das Auswertemodul 54, dass das Zugfahrzeug 90 steht. Der Beschleunigungssensor 55 ermittelt nämlich keinerlei Beschleunigung a. Beispielsweise beobachtet das Auswertemodul 54 über längere Zeit, ob sich die Beschleunigung des Zugfahrzeugs 90 ändert. Ist dies nicht der Fall, repräsentiert das Kraftsignal 33 also im Wesentlichen die Stützlast Fz, so dass das Auswertemodul 54 zwischen einem Zeitpunkt t = 0 und einem Zeitpunkt t1 die Stützlast Fz ermittelt.

In einem Schritt S3 erkennt das Auswertemodul 54 eine Beschleunigung a des Zugfahrzeugs 90, die zum Zeitpunkt t1 beginnt. Dann beendet das Auswertemodul 54 die Ermittlung der Stützlast Fz.

Allerdings ist die Beschleunigung zum Zeitpunkt t1 noch relativ gering. Erreicht jedoch die Beschleunigung a zu einem Zeitpunkt t2 einen Wert a1, erkennt das Auswertemodul 54 eine signifikante Beschleunigung, die zur Ermittlung der Masse m des Anhängers 92 geeignet ist. Vorteilhaft unter Verwendung der Formeln (1) bis (8) läuft dann in einem Schritt S4 ein Algorithmus zur Anhängermasseerkennung ab, in dessen Rahmen die Auswerteeinrichtung 50, zweckmäßigerweise unter Berücksichtigung der vorher bereits ermittelten und im Speicher 53 zwischengespeicherten Stützlast Fz, die Masse m des Anhängers 92. Auch die Masse m wird zweckmäßigerweise im Speicher 53 gespeichert. Der Schritt S4 endet jedenfalls zu einem Zeitpunkt t3, wenn nämlich bei Erreichen eines Beschleunigungswerts a2 die Beschleunigung des Zugfahrzeugs 90 endet und/oder das Zugfahrzeug 90 eine Grenz-Geschwindigkeit überschreitet, bei der beispielsweise Rollwiderstandseinflüsse und/oder Luftwiderstandseinflüsse so signifikant ansteigen, dass eine zuverlässige Massenerkennung nicht mehr ohne weiteres möglich ist.

Weiterhin umfasst das Ablaufdiagramm gemäß Figur 10 noch einen Zustand W, nämlich warten, in den das Auswertemodul 54 geht, bis das Zugfahrzeug 90 wieder zum Stehen gekommen ist.

Die Auswerteeinrichtung 50 zeigt beispielsweise die Stützlast und/oder die Masse m des Anhängers 92 an einem Display 56 an. Es aber auch möglich, dass die Auswerteeinrichtung 50 über eine Bus-Schnittstelle 57 mit dem Bordnetz 93 des Zugfahrzeugs 90 verbunden ist, beispielsweise um Beschleunigungswerte zu empfangen und/oder von ihr ermittelte Werte für die Stützlast und/oder die Masse des Anhängers und/oder die Zuglast an das Bordnetz 93 zu übertragen, so dass beispielsweise ein elektronisches Stabilisierungsprogramm anhand der so erhaltenen Werte die Fahrstabilität des Zugfahrzeugs 90 regeln kann und/oder die Werte an einem Display, zum Beispiel im Armaturenbereich des Zugfahrzeugs 90 angezeigt werden können.

Zur Verbesserung einer Mess- und/oder Rechengenauigkeit können selbstverständlich weitere Kraftsensoren an den Halterungen 11, 111 und/oder den Kuppelträgern 14, 114 vorgesehen sein. Ferner können auch im Wesentlichen für eine dedizierte Stützlasterfassung oder eine dedizierte Zugkrafterfassung vorgesehene Kraftsensoren vorteilhaft sein, z.B. ein Kraftsensor 36 an dem sich bei Zugkraft-Beanspruchung des Kuppelträgers 14 verformenden Verformungsbereich 42. Der Verformungsbereich 42 verformt sich bei Stützlast-Belastung nur unwesentlich, so dass sein Kraftsignal im Wesentlichen die Zuglast repräsentiert und von den Auswerteeinrichtung 50, 150 entsprechend ausgewertet werden kann.

**Patentansprüche**

1. Verfahren zur Ermittlung eines Anbringungsorts (32; 132) für einen Kraftsensor (30) an einer Anhängekupplung (10, 110) für ein Zugfahrzeug (90), die einen insbesondere einen Kupplungsarm umfassenden Kuppelträger (14; 114), an dessen freiem Ende ein Kuppelelement (23), insbesondere eine Kupplungskugel (22), zum Anhängen eines Anhängers (92) angeordnet ist und der an einer am Zugfahrzeug (90) befestigbaren Halterung (11; 111) fest oder beweglich angeordnet ist, und mindestens einen Kraftsensor (30) zur Erfassung einer auf die Anhängekupplung (10, 110) einwirkenden Kraft aufweist, wobei der mindestens eine Kraftsensor (30) einen auf Druck- und/oder Zug empfindlichen Verformungssensor (35) umfasst, der an einem an dem Kuppelträger (14; 114) oder der Halterung (11; 111) vorgesehenen Anbringungsort (32; 132) angeordnet ist, an dem eine Dehnungsverformung und/oder Stauchungsverformung aufgrund einer auf die Anhängekupplung (10, 110) einwirkenden, durch den Anhänger (92) verursachten Kraft messbar ist, **gekennzeichnet durch**:

   a) Ermitteln einer Verformung des Kuppelträgers (14; 114) und/oder der Halterung (11; 111) bei einer durch eine bei einem Zugbetrieb des Anhängers (92) auf das Kuppelelement (23) wirkenden Zuglast (Fx),
   b) Ermitteln einer Verformung des Kuppelträgers (14; 114) und/oder der Halterung (11; 111) bei einer durch eine auf die Anhängekupplung (10, 110) wirkenden Stützlast (Fz) des Anhängers (92),
   c) Ermitteln des Anbringungsorts (32; 132) derart, dass an dem Anbringungsort (32; 132) eine Verformung zur Betätigung des mindestens einen Kraftsensors (30) gemäß Schritt a und eine Verformung gemäß Schritt b zur Betätigung des mindestens einen Kraftsensors (30) stattfindet, wobei der Anbringungsort (32; 132) im Bereich einer größten durch die Zuglast (Fx) verursachbaren Verformung des Kuppelträgers (14; 114) oder der Halterung (11; 111) und/oder im Bereich einer größten durch die Stützlast (Fz) verursachbaren Verformung des Kuppelträgers (14; 114) oder der Halterung (11; 111) ermittelt wird.

2. Verfahren nach Anspruch 1, **gekennzeichnet durch** Anbringen einer Zuglast (Fx) oder einer Stützlast (Fz) an dem Kuppelelement (23) oder Ausführen einer Finite-Elemente-Berechnung.

3. Verfahren nach Anspruch 1 oder 2, **gekennzeichnet durch** Vorsehen des Anbringungsorts (32; 132) an einer von einer Fahrbahn abgewandten Oberseite (28) des Kuppelträgers (14; 114) oder der Halterung (11; 111).

4. Verfahren nach einem der vorhergehenden Ansprüche, **gekennzeichnet durch** Auswählen des Anbringungsorts (32; 132) derart, dass eine Leitungsverbindung (51) zu einer insbesondere in einem für einen Bediener bequem einsehbaren Sichtbereich angeordneten Auswerte- und/oder Anzeigeeinrichtung (50) kürzer als an einem alternativen Ort für den mindestens einen Verformungssensor (35) ist, an dem ebenfalls Verformungen durch die Stützlast (Fz) und die Zuglast (Fx) verursachbar sind.

5. Verfahren nach einem der vorhergehenden Ansprüche, **gekennzeichnet durch** Auswählen des Anbringungsorts (32; 132) derart, dass an dem Anbringungsort (32; 132) die durch die Zuglast (Fx) verursachbare Verformung und die durch die Stützlast (Fz) verursachbare Verformung einen ähnlichen Betrag oder den gleichen Betrag aufweisen.

6. Verfahren nach einem der vorhergehenden Ansprüche, **gekennzeichnet durch** Verwenden eines Dehnungsmessstreifens (31) und/oder eines Drucksensors als Verformungssensor (35).

7. Verfahren nach einem der vorhergehenden Ansprüche, **gekennzeichnet durch** Vorsehen einer Auswerteeinrichtung (50; 150), die zur Ermittlung eines Anhänger-Massewerts des Anhängers (92) anhand eines Kraftsignals (33) des mindestens einen Kraftsensors (30) und eines Beschleunigungswerts ausgestaltet ist.

8. Verfahren nach einem der vorhergehenden Ansprüche, **gekennzeichnet durch** Vorsehen einer Auswerteeinrichtung (50; 150), die zur Auswertung eines Kraftsignals (33) des mindestens einen Kraftsensors (30) in Abhängigkeit von einem eine Beschleunigung des Zugfahrzeugs (90) repräsentierenden Beschleunigungswert und/oder von einem eine Fahrgeschwindigkeit des Zugfahrzeugs (90) repräsentierenden Geschwindigkeitswert ausgestaltet ist.

9. Anhängekupplung für ein Zugfahrzeug (90), mit einem insbesondere einen Kupplungsarm umfassenden Kuppelträger (14; 114), an dessen freiem Ende ein Kuppelelement (23), insbesondere eine Kupplungskugel (22), zum Anhängen eines Anhängers (92) angeordnet ist und der an einer am Zugfahrzeug (90) befestigbaren Halterung (11; 111) fest oder beweglich angeordnet ist, und mit mindestens einem Kraftsensor (30) zur Erfassung einer auf die Anhängekupplung (10, 110) einwirkenden Kraft, wobei der mindestens eine Kraftsensor (30) einen auf Druck- und/oder Zug empfindlichen Verformungssensor (35) umfasst, der an einem an dem Kuppelträger (14; 114) oder der Halterung (11; 111) vorgesehenen Anbringungsort (32; 132) angeordnet ist, an dem eine Dehnungsverformung und/oder Stauchungsverformung aufgrund einer auf die Anhängekupplung (10, 110) einwirkenden, durch den Anhänger (92) verursachten Kraft messbar ist, wobei der Anbringungsort (32; 132) so gewählt ist, dass an dem Anbringungsort (32; 132) eine durch eine bei einem Zugbetrieb des Anhängers (92) auf das Kuppelelement (23) wirkende Zuglast verursachbare Verformung zur Betätigung des mindestens einen Kraftsensors (30) vorhanden ist und eine durch eine auf die Anhängekupplung (10, 110) wirkende Stützlast des Anhängers (92) verursachbare Verformung zur Betätigung des mindestens einen Kraftsensors (30) vorhanden ist, wobei der Anbringungsort (32; 132) anhand des Verfahrens nach einem der vorhergehenden Ansprüche ermittelt ist.

## Claims

1. Method for determining a mounting location (32; 132) for a force sensor (30) on a trailer coupling (10; 110) for a towing vehicle (90), the trailer coupling (10; 110) in particular comprising a coupling support (14; 114), in particular with a coupling arm, at the free end of which is located a coupling element (23), in particular a coupling ball (22), for attaching a trailer (92), and which is fixedly or movably located on a holder (11; 111), which can be secured to the towing vehicle (90), and further comprising at least one force sensor (30) for detecting a force acting on the trailer coupling (10; 110), wherein the at least one force sensor (30) comprises a deformation sensor (35), which is sensitive to pressure and/or tension and which is located in a mounting location (32; 132) provided on the coupling support (14; 114) or the holder (11; 111), where a tensile strain deformation and/or a compression deformation based on a force acting on the trailer coupling (10; 110) and caused by the trailer (92) can be measured, **characterised by**:

a) the determination of a deformation of the coupling support (14; 114) and/or the holder (11; 111) at a tensile load (Fx) acting on the coupling element (23) in a towing operation of the trailer (92),

b) the determination of a deformation of the coupling support (14; 114) and/or the holder (11; 111) at a noseweight (Fz) of the trailer (92) acting on the trailer coupling (10; 110),

c) the determination of the mounting location (32; 132) in such a way that at the mounting location (32; 132) there is a deformation to actuate the at least one force sensor (30) according to step a and a deformation to actuate the at least one force sensor (30) according to step b, wherein the mounting location (32; 132) is determined to be in the region of a greatest deformation of the coupling support (14; 114) or the holder (11; 111) which can be caused by the tensile load (Fx) and/or in the region of a greatest deformation of the coupling support (14; 114) and/or the holder (11; 111) which can be caused by the noseweight (Fz).

2. Method according to claim 1, **characterised by** the application of a tensile load (Fx) or a noseweight (Fz) to the coupling element (23) or by performing a finite elements calculation.

3. Method according to claim 1 or 2, **characterised by** the provision of the mounting location (32; 132) at a top side (28) of the coupling support (14; 114) or the holder (11; 111) which is remote from a carriageway.

4. Method according to any of the preceding claims, **characterised by** the selection the mounting location (32; 132) in such a way that a cable connection (51) to an evaluation and/or display device (50) located in particular in a viewing range which is comfortably accessible for an operator is shorter that at an alternative location for the at least one deformation sensor (35) at which deformations can likewise be caused by the noseweight (Fz) and the tensile load (Fx).

5. Method according to any of the preceding claims, **characterised by** the selection the mounting location (32; 132) in such a way that at the mounting location (32; 132) the deformation which can be caused by the tensile load (Fx) and the deformation which can be caused by the noseweight (Fz) have a similar value or the same value.

6. Method according to any of the preceding claims, **characterised by** the use of a strain gauge (31) and/or a pressure sensor as deformation sensor (35).

7. Method according to any of the preceding claims, **characterised by** the provision of an evaluation device (50; 150) designed for determining a trailer measured value of the trailer (92) using a force signal (33) of the at least one force sensor (30) and an acceleration value.

8. Method according to any of the preceding claims, **characterised by** the provision of an evaluation device (50; 150) designed for evaluating a force signal (33) of the at least one force sensor (30) as a function of an acceleration value representing an acceleration of the towing vehicle (90) and/or of a speed value representing a travelling speed of the towing vehicle (90).

9. Trailer coupling for a towing vehicle (90), comprising a coupling support (14; 114), in particular with a coupling arm, at the free end of which is located a coupling element (23), in particular a coupling ball (22), for attaching a trailer (92), and which is fixedly or movably located on a holder (11; 111), which can be secured to the towing vehicle (90), and further comprising at least one force sensor (30) for detecting a force acting on the trailer coupling (10; 110), wherein the at least one force sensor (30) comprises a deformation sensor (35), which is sensitive to pressure and/or tension and which is located in a mounting location (32; 132) provided on the coupling support (14; 114) or the holder (11; 111), where a tensile strain deformation and/or a compression deformation based on a force acting on the trailer coupling (10; 110) and caused by the trailer (92) can be measured, wherein the mounting location (32; 132) is selected in such a way that, at the mounting location (32; 132), a deformation for actuating the at least one force sensor (30), which deformation can be caused by a tensile load acting on the coupling element (23) in a towing operation of the trailer (92) is present and a deformation for actuating the at least one force sensor (30), which deformation can be caused by a noseweight of the trailer (92) acting on the trailer coupling (10; 110) is present, the mounting location (32; 132) being determined using the method according to any of the preceding claims.

**Revendications**

1. Procédé de détermination d'un lieu de montage (32 ; 132) pour un capteur de force (30) sur un attelage (10, 110) pour un véhicule tracteur (90), qui présente un support d'attelage (14 ; 114) comportant en particulier un bras d'attelage, sur l'extrémité libre duquel un élément d'attelage (23), en particulier une boule d'attelage (22) est agencée pour l'attelage d'une remorque (92) et qui est agencé de manière fixe ou mobile sur un support (11 ; 111) pouvant être fixé sur le véhicule tracteur (90), et présente au moins un capteur de force (30) pour la détection d'une force agissant sur l'attelage (10, 110), dans lequel l'au moins un capteur de force (30) comporte un capteur de déformation (35) sensible à la pression et/ou à la traction, qui est agencé sur un lieu de montage (32 ; 132) prévu sur le support d'attelage (14 ; 114) ou le support (11 ; 111), sur lequel une déformation d'allongement et/ou une déformation d'écrasement est mesurable en raison d'une force agissant sur l'attelage (10, 110), causée par la remorque (92), **caractérisé par** :

   a) la détermination d'une déformation du support d'attelage (14; 114) et/ou du support (11 ; 111) par une charge de traction (Fx) agissant lors d'un mode de traction de la remorque (92) sur l'élément d'attelage (23),
   b) la détermination d'une déformation du support d'attelage (14; 114) et/ou du support (11 ; 111) par une charge d'appui (Fz) agissant sur l'attelage (10, 110) de la remorque (92),
   c) la détermination du lieu de montage (32 ; 132) de telle manière que sur le lieu de montage (32 ; 132), une déformation pour l'actionnement d'au moins un capteur de force (30) selon l'étape a et une déformation selon l'étape b pour l'actionnement d'au moins un capteur de force (30) se produisent, dans lequel le lieu de montage (32 ; 132) est déterminé dans la zone d'une plus grande déformation pouvant être causée par la charge de traction (Fx) du support d'attelage (14 ; 114) ou du support (11 ; 111) et/ou dans la zone d'une plus grande déformation pouvant être causée par la charge d'appui (Fz) du support d'attelage (14 ; 114) ou du support (11 ; 111).

2. Procédé selon la revendication 1, **caractérisé par** le montage d'une charge de traction (Fx) ou d'une charge d'appui (Fz) sur l'élément de couplage (23) ou la réalisation d'un calcul d'éléments finis.

3. Procédé selon la revendication 1 ou 2, **caractérisé par** la prévoyance du lieu de montage (32 ; 132) sur un côté supérieur (28) éloigné d'une chaussée du support d'attelage (14 ; 114) ou du support (11 ; 111).

4. Procédé selon l'une des revendications précédentes, **caractérisé par** la sélection du lieu de montage (32 ; 132) de telle manière qu'une liaison de conduite (51) avec un dispositif d'évaluation et/ou d'affichage (50) agencé en particulier dans une zone visuelle visible confortablement pour un utilisateur soit plus courte que sur un lieu alternatif pour l'au moins un capteur de déformation (35), sur lequel des déformations peuvent également être causées par la charge d'appui (Fz) et la charge d'appui (Fx).

5. Procédé selon l'une des revendications précédentes, **caractérisé par** la sélection du lieu de montage (32 ; 132) de telle manière que sur le lieu de montage (32 ; 132), la déformation pouvant être causée par la charge d'appui (Fx) et la déformation pouvant être causée par la charge d'appui (Fz) présentent une étendue similaire ou la même étendue.

6. Procédé selon l'une des revendications précédentes, **caractérisé par** l'utilisation d'une jauge de contrainte (31) et/ou d'un capteur de pression comme capteur de déformation (35).

7. Procédé selon l'une des revendications précédentes, **caractérisé par** la prévoyance d'un dispositif d'évaluation (50 ; 150) qui est configuré pour la détermination d'une valeur de masse de remorque de la remorque (92) à l'aide d'un signal de force (33) d'au moins un capteur de force (30) et d'une valeur d'accélération.

8. Procédé selon l'une des revendications précédentes, **caractérisé par** la prévoyance d'un dispositif d'évaluation (50 ; 150) qui est configuré pour l'évaluation d'un signal de force (33) d'au moins un capteur de force (30) en fonction d'une valeur d'accélération représentant une accélération du véhicule tracteur (90) et/ou d'une valeur de vitesse représentant une vitesse de déplacement du véhicule tracteur (90).

9. Attelage pour un véhicule tracteur (90) avec un support d'attelage (14 ; 114) comprenant en particulier un bras d'attelage, sur l'extrémité libre duquel un élément d'attelage (23), en particulier une boule d'attelage (22) pour l'attelage d'une remorque (92) est agencée et qui est agencé fixement ou de manière mobile sur un support (11 ; 111) pouvant être fixé sur le véhicule tracteur (90), et avec au moins un capteur de force (30) pour la détection d'une force agissant sur l'attelage (10, 110), dans lequel l'au moins un capteur de force (30) comporte un capteur de déformation (35) sensible à la pression et/ou à la traction, qui est agencé sur un lieu de montage (32 ; 132) prévu sur le support d'attelage (14; 114) ou le support (11; 111), sur lequel une déformation d'allongement et/ou une déformation d'écrasement est mesurable en raison d'une force causée par la remorque (92), agissant sur l'attelage (10, 100), dans lequel le lieu de montage (32 ; 132) est choisi de sorte que sur le lieu de montage (32 ; 132), une déformation pouvant être causée par une charge de traction agissant lors d'un mode de traction de la remorque (92) sur l'élément d'attelage (23) est présente pour l'actionnement d'au moins un capteur de force (30) et une déformation pouvant être causée par une charge d'appui agissant sur l'attelage (10, 100) de la remorque (92) est présente pour l'actionnement d'au moins un capteur de force (30), dans lequel le lieu de montage (32; 132) est déterminé à l'aide du procédé selon l'une des revendications précédentes.

Fig.1

Fig.2

**Fig.3**

**Fig.4**

**Fig.5**

**Fig.6**

**Fig.7**

Fig.8

Fig.10

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10327564 A1
- DE 3617426 A1

- DE 102010009986 A1